# EUROPEAN PATENT SPECIFICATION

(11) **EP 1 832 449 B1**
(45) Date of publication and mention of the grant of the patent: **01.08.2012**
(21) Application number: 06810544.4
(22) Date of filing: 26.09.2006
(51) Int. Cl.: B60G 21/055, F16F 1/36, F16F 15/08

(54) **STABILIZER BUSH**
STABILISATORBUCHSE
DOUILLE DE BARRE STABILISATRICE

(30) Priority: 15.12.2005 JP 2005361741
(43) Date of publication of application: 12.09.2007
(73) Proprietor: Honda Motor Co., Ltd., Tokyo 107-8556 (JP)
(72) Inventor: MIYAMOTO, Yasuo c/o Honda R&D Co., Ltd., Saitama 351-0193 (JP); SUZUKI, Kazutaka c/o Honda R&D Co., Ltd., Saitama 351-0193 (JP); YAMAZAKI, Yuji c/o Honda R&D Co., Ltd., Saitama 351-0193 (JP)
(74) Representative: Prechtel, Jörg
(86) International application number: PCT/JP2006/319019
(87) International publication number: WO 2007/069380

(56) References cited:
- EP-A- 0 132 502
- EP-A- 0 893 291
- EP-B1- 1 067 307
- WO-A-2006/112092
- DE-U1- 9 002 537
- FR-A- 2 480 683
- FR-A- 2 657 564
- GB-A- 1 042 265
- GB-A- 2 021 707
- JP-A- 6 270 642
- JP-A- 9 280 286
- JP-A- 06 270 642
- JP-A- 07 266 835
- JP-A- 10 184 792
- JP-A- 2000 213 535
- JP-A- 2000 213 535
- JP-U- 4 011 710
- JP-U- 04 038 809
- JP-U- 06 067 118
- JP-U- 58 001 837
- JP-U- 58 001 837
- US-A- 5 595 452

## Description

### FIELD OF THE INVENTION

The present invention relates to a stabilizer bush for holding a torsion part of a vehicular stabilizer (also called an anti-roll bar).

### RELATED ART

Conventionally, in a torsion part of a vehicular stabilizer is inserted a vibration absorbing stabilizer bush consisting of an elastic body made of rubber formed approximately cylindrically and the torsion part is attached to a vehicle body by a bracket.

Thus a stabilizer is attached to a vehicle body, making a stabilizer bush intervene, and thereby buffers a vibration and shock of the body. Then as the stabilizer in a patent document 1, at left and right opening ends of an axial hole are respectively formed lips closely contacting the stabilizer. The stabilizer bush prevents such earth and sand, dust, and muddy water from invading a sliding face between itself and the stabilizer in the axial hole by the lips.

In DE-U-90 025 37 on which the preamble of claim 1 is based, and EP-A-0 893 291, the inner surface of the hole is combined by two hollow cones. In the mounted condition is no gap between the hole center portion and the stabilizer rod.

In FR-A-2 480 683, the axial end portions of the hole are cylindrical, and connected by a barrel-shaped center portion having an increased inner diameter to fit on a barrel-shaped portion of the stabilizer rod having an increased outer diameter. In the mounted condition, there is no gap between the hole center portion and the stabilizer rod as there, the stabilizer bush has the same radial thickness over the axial length thereof.

In FR-A-2 657 564 , the axial end portions of the hole are cylindrical, with a cylindrical center portion having an enlarged inner diameter to accommodate an anti friction sleeve. There, in the mounted condition no gap is present between the hole center portion and the stabilizer produced by radial pressure from the stabilizer.

In EP-A-0 132 502, the bush is formed as a kind of chain belt wrapped onto the stabilizer rod. In the mounted condition, there is no gap between the hole center portion and the stabilizer.

In GB-A-1 042 265, the cylindrical bore has axially extending grooves.

Similar, in JP-U-58-001837, the cylindrical bore has axially extending grooves.

In JP-A-09 280268 and JP-A-06 270642, the end of the cylindrical bore are rounded to fit on a bent stabilizer rod.

US-A-5 595 452 and GB-A-20 21 707, show a lubricant reservoir in the cylindrical bore.

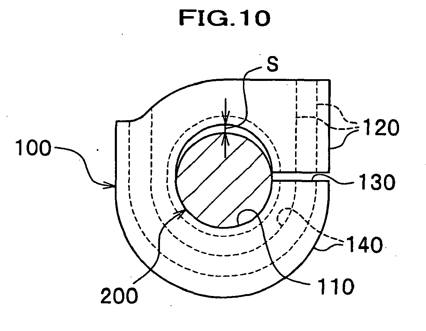

FIG. 10 is an enlarged section view of a main part showing a state of a conventional stabilizer bush being attached.
As shown in FIG. 10, a stabilizer bush 100 is thick-cylindrically formed, consisted of a rubber-made elastic body containing a lubricant, and at a center part of the bush 100 is drilled an axial hole 110 for inserting and holding a stabilizer 200. In the stabilizer bush 100 its outer face is formed into an approximately U-letter shape in side view, and a slit 130 is formed for press fitting and building the stabilizer 200 in the axial hole 110 from outer peripheral faces 120.

At both ends in vehicular left and right directions of the stabilizer bush 100 are respectively formed flanges 140; a bracket (not shown) for attaching the bush 100 to the vehicle body is engaged between the brackets 140, and the bush 100 is fixed to the vehicle body by the bracket through bolts.
In addition, the stabilizer bush 100 is normally formed, having a constant fastening range, and by the range being compressed, the bush 100 is firmly attached to the vehicle body.

### DISCLOSURE OF THE INVENTION

### PROBLEMS TO BE SOLVED BY THE INVENTION

However, in the stabilizer bush as shown in the Utility Model Laid-Open Publication No. H 04-11710, there is a problem that the lips tend to deteriorate by a depression-form gap being formed between a reverse side of each of the lips and the stabilizer.

Furthermore, the lips are formed from a thin-form protrusion piece, and thereby tend to be elastically deformed. Therefore, in the stabilizer bush a rigidity of the opening ends of the axial hole lowers; in some case the stabilizer vibrates, is elastically deformed, and a gap is generated between the stabilizer and the bush due to up and down movements of left and right wheel suspensions during running. Whereat, earth and sand invades an inside of the lips through the gaps, and stays in the depression-form gap inside the lips in some case.

When earth and sand stays inside a lip, there are problems that: a friction increases due to the earth and sand, and a sound (abnormal sound) like a stick-slip sound is generated; the earth and sand grinds a coating film of a stabilizer and prompts its rust degradation; and the earth and sand damages a metal surface of the stabilizer and lowers its reliability.

Generally, in order to prevent earth and sand from invading between a stabilizer bush and a stabilizer, it is cited to enlarge a fastening range between them.

However, in a case of enlarging a fastening range, there is a problem that when a stabilizer makes a rotational movement, a friction increases and an operation stability and riding comfort of an automobile lower; therefore the range cannot be enlarged.

Furthermore, in the stabilizer bush having such the slit 130 as shown in FIG. 10, because the bush is easily deformed according to a gap of the slit 130 being formed, there is a problem that a gap S is formed between the axial hole 110 and the stabilizer 200; therefore, such earth and sand, dust, and muddy water tend to invade the gap S.

Consequently, the present invention is intended to solve the problems, and provides a stabilizer bush for preventing such earth and sand, dust, and muddy water from invading a contact face between an axial hole of the bush and a stabilizer while maintaining an operation stability and riding comfort of an automobile.

### MEANS TO SOLVE THE PROBLEMS

In order to solve the problems, a stabilizer bush recited in claim 1 is configured to insert and hold a torsion part of a stabilizer in an axial hole formed in an elastic body and to hold an outer peripheral face of the elastic body by a bracket attached to a vehicle body, and in the axial hole an inner diameter is configured to gradually decrease from a center part toward outsides in axial directions.

In accordance with the invention recited in claim 1, in the axial hole of the stabilizer bush is formed the diameter to gradually decrease from the center part toward the outsides in the axial directions. Thus left and right opening end sides of the axial hole comparatively strongly becomes in close contact with a sliding face of the stabilizer; a center side thereof comparatively weakly slides in contact with the sliding face. As the result, because the left and right opening end sides of the axial hole closely contact the stabilizer and are occluded, an invasion of such earth and sand, dust, and muddy water is prevented.

The axial hole of the stabilizer bush is continuously formed in the circumferential direction, and thereby such a slit is not formed. Therefore, because it is possible to suppress a contact face between the axial hole and the stabilizer from being deformed, it is possible to more surely prevent such earth and sand, dust, and muddy water from invading an inside of the axial hole. The axial hole is curved from the center part to the respective axial ends so that the axial ends of the bore which will always keep close contact with the stabilizer rod even if the gap is formed during operation, so that dust and mud cannot enter into the center part of the hole.

Preferably, at the side ends in the axial directions of the elastic body are formed grooves along the opening ends of the axial hole, and thereby the opening ends of the axial hole tend to be elastically deformed by an amount of the grooves being formed. Therefore, when press fitting the stabilizer in the axial hole, vicinities of the both opening ends of the hole are elastically deformed and closely contact a sliding face of the stabilizer; thus it is possible to prevent such earth and sand, dust, and muddy water from invading the face.

Preferably, a center axis of the axial hole is curved outward from one end of the bush in the axial direction, and thereby vicinities of the opening ends closely contact the stabilizer; therefore, it is possible to stably ensure a fastening range. Moreover, even if an excessive stress is applied to the one opening end, the vicinity thereof is prevented from being deformed as if being bent; therefore, it is eliminated for a strain to locally occur.

Preferably, the lubricant is coated inside the axial hole, and thereby in the stabilizer bush a friction coefficient inside the axial hole is lowered and the bush tends to be deformed as if its whole undulates; therefore, even if an excessive stress is applied to the opening ends, the bush is prevented from being locally deformed. Furthermore, because the lubricant is water repellent, an invasion of muddy water is prevented.

Preferably, the depression configured to reserve the lubricant is formed inside the axial hole, and thereby, even if an oil in the vicinities of the opening ends is washed away by muddy water, the lubricant reserved in the depression is supplied thereto; thus, the water repellency of the stabilizer bush is held for a long time.

In accordance with the stabilizer bush of the present invention, while maintaining an operation stability and riding comfort of an automobile, it is possible to hold a durability of the opening ends of the axial hole, to closely contact the contact face between the axial hole of the bush and the stabilizer, and to prevent such earth and sand, dust, and muddy water from invading the inside of the axial hole.

### EFFECT OF THE INVENTION

In accordance with a stabilizer bush of the present invention it is possible to hold a durability of an opening end of an axial hole, to make the axial hole of the stabilizer bush contact a contact face with the stabilizer, and to prevent such earth and sand, dust, and muddy water from invading in the axial hole, while maintaining an operation stability and riding comfort of an automobile.

### BRIEF DESCRIPTION OF THE DRAWINGS

FIG. 1 is a perspective view of a stabilizer showing an installation state of a stabilizer bush related to an embodiment of the present invention.
FIGS. 2A and 2B are drawings showing the stabilizer bush related to the embodiment of the present invention; FIG. 2A is an enlarged section view; and FIG. 2B is an enlarged side view.
FIGS. 3A and 3B are drawings showing the stabilizer bush related to the embodiment of the present invention; FIG. 3A is an enlarged section view showing a built-in state of the bush; and FIG. 3B is an enlarged section view showing a state of a larger load being applied to the stabilizer.
FIG. 4 is a drawing that shows the stabilizer bush related to the embodiment of the present invention and is an enlarged section view of a main part showing a state of a particle such as earth and sand having invaded an inside of an axial hole.
FIGS. 5A and 5B are drawings showing a first modification example of the stabilizer bush related to the embodiment of the present invention; FIG. 5A is an enlarged section view; and FIG. 5B is an enlarged side view.
FIGS. 6A and 6B are drawings showing the first modification example of the stabilizer bush related to the embodiment of the present invention; FIG. 6A is an enlarged section view showing a built-in state of the bush; and FIG. 6B is an enlarged section view showing a state of a larger load being applied to the stabilizer.
FIG. 7 is an enlarge section view showing a second modification example of the stabilizer bush related to the embodiment of the present invention.
FIG. 8 is an enlarge section view showing a third modification example of the stabilizer bush related to the embodiment of the present invention.
FIG. 9 is an enlarge section view showing a fourth modification example of the stabilizer bush related to the embodiment of the present invention.
FIG. 10 is an enlarged section view of a main part showing a state of a conventional stabilizer bush being attached.

### DESCRIPTION OF ALPHANUMERALS

- 2: Stabilizer
- 2a: Torsion Part
- 2b: Bent Part
- 4, 6, 7, 8, 9: Stabilizer Bush
- 4a, 6a, 7a, 8a, 9a: Elastic Body
- 4b, 6b, 7b, 8b, 9b: Axial Hole
- 4c: Outer Peripheral Face
- 4e, 6d, 7c, 8c, 9c: Opening End
- 5: Bracket
- 6c: End
- 6e: Groove Part
- 9d: Depression
- d1, d2: Inner Diameter
- La, Lb: Lubricant

### BEST MODE FOR CARRYING OUT THE INVENTION

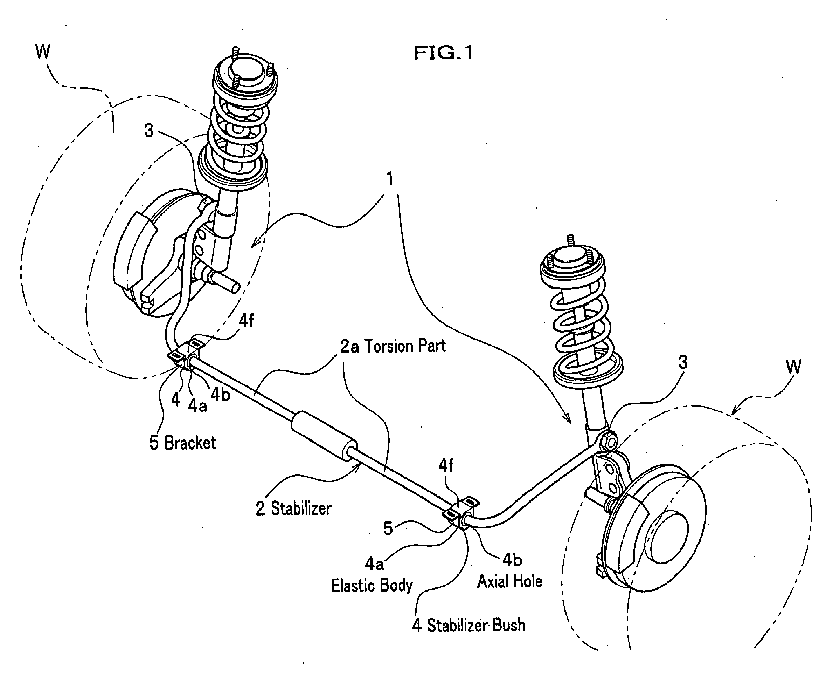

Next will be described a stabilizer bush related to an embodiment of the present invention, referring to FIGS. 1 to 4. FIG. 1 is a perspective view of a stabilizer showing an installation state of a stabilizer bush related to an embodiment of the present invention.

### <<Configuration of Stabilizer>>

As shown in FIG. 1, a stabilizer 2 suppresses a rolling of a vehicle body when a vehicle swivels, and is attached to independent suspensions 1 of the body so that respective left and right wheels W can move independently. The stabilizer 2 comprises torsion parts 2a composed of a bar-form spring member, and at left and right ends thereof are formed bolt insertion holes (not shown) for fastening respective torsion parts 2a with bolts 3. On each of the left and right parts of the stabilizer 2 is fitted a stabilizer bush 4.

### <<Configuration of Stabilizer Bush>>

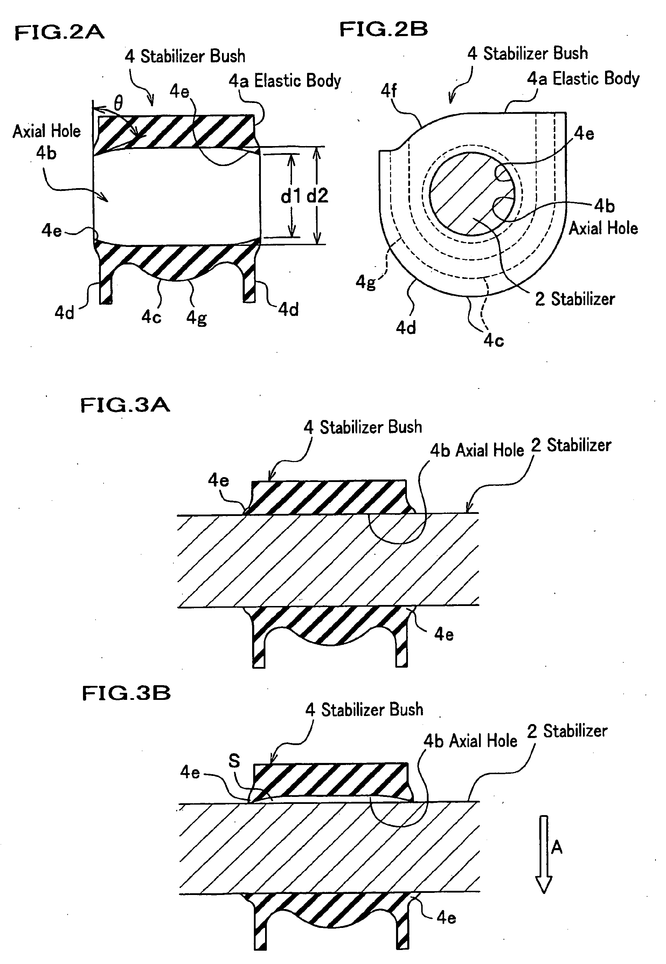

As shown in FIG. 1, in each of the stabilizer bushes 4 an end of the stabilizer 2 is pushed in an axial hole 4b drilled in an elastic body 4a, moved to the torsion part 2a, and held there. A bracket 5 attached to the vehicle body is loaded on an outer peripheral face 4c (see FIGS. 2A and 2B) of the elastic body 4a for forming the stabilizer bush 4.

FIGS. 2A and 2B are drawings showing the stabilizer bush related to the embodiment of the present invention; FIG. 2A is an enlarged section view; and FIG. 2B is an enlarged side view.

As shown in FIGS. 2A and 2B, in the stabilizer bush 4 is drilled the axial hole 4b where the stabilizer 2 is inserted in left and right lateral directions. The stabilizer bush 4 is formed into a thick cylindrical form with, for example, the elastic body 4a for vibration absorption made of rubber containing a lubricant.

As shown in FIG. 2A, at both ends in left and right directions, the stabilizer bush 4 respectively has flange parts 4d engaged by the bracket 5 (see FIG. 1) of which a section is approximately an Ω-letter form, and is fixed to the vehicle body by fastening the bracket 5 to the body with bolts. Between the left and right flange parts 4d is formed a curved-surface form convex part 4g where the bracket 5 is pressed.
As shown in FIG. 2B, in the side view of the stabilizer bush 4 the outer peripheral face 4c is formed into an approximately U-letter form, and a top face 4f is formed into a curved-surface form.

As shown in FIG. 2A, in the axial hole 4b inner diameters d2 gradually are decreased to inner diameters d1 from a center part toward outsides in axial directions, and the axial hole 4b is continuously formed in a circumferential direction. In other words, in the axial hole 4b the inner diameters d1 at left and right opening ends 4e is are formed smaller than the inner diameter d2 at the center part. Therefore, an angle θ at the left and right opening ends 4e is formed into an acute angle slightly smaller than 90 degrees.

FIGS. 3A and 3B are drawings showing the stabilizer bush related to the embodiment of the present invention; FIG. 3A is an enlarged section view showing a built-in state of the bush; and FIG. 3B is an enlarged section view showing a state of a larger load being applied to the stabilizer.
Then as shown in FIGS. 2, 3A, and 3B, when the stabilizer 2 is inserted and built in the axial hole 4b, it is designed to be built in a state of vicinities of the opening ends 4e of the stabilizer bush 4 being pressed, always in close contact with the stabilizer 2.

### «Action of Stabilizer Bush»

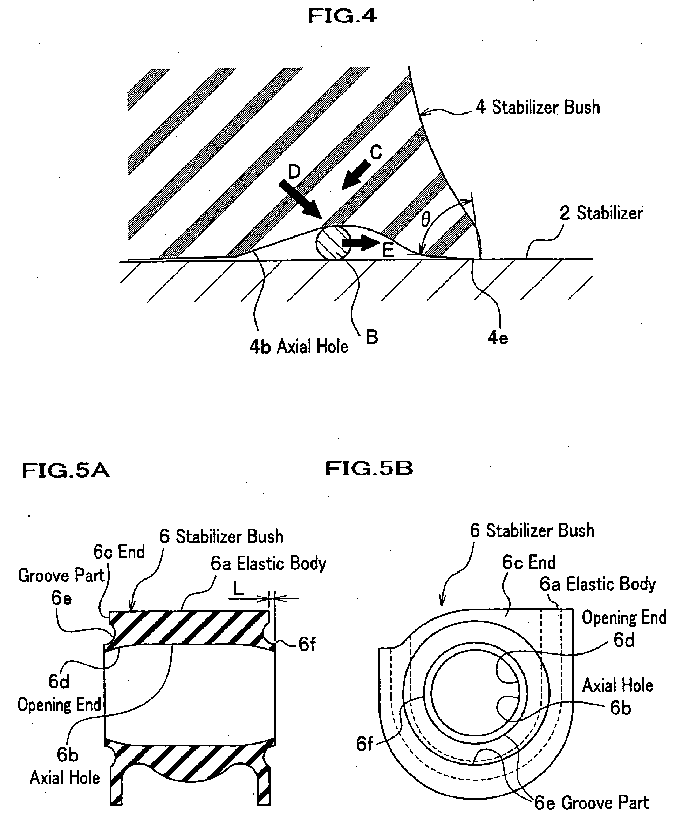

Next will be described an action of the stabilizer bush 4 related to the embodiment of the present invention, mainly referring to FIGS. 3A, 3B, and 4.
In a case that a normal load is applied to the stabilizer 2 where the stabilizer bush 4 is press fitted; as shown in FIG. 3A, the opening ends 4e of the axial hole 4b receive a comparatively large force and are pressed against the stabilizer 2, and the center part of the axial hole 4b is pressed against the stabilizer 2 through a comparatively small force.

In the stabilizer bush 4, for example, due to a lateral force in swivel running, a larger load is applied to the stabilizer 2 in a downward direction of an arrow mark A shown in FIG. 3B. Whereat, because the stabilizer bush 4 receives the larger load from the stabilizer 2 on a lower face of the bush 4 in the axial hole 4b, the stabilizer 2 is pressed onto the lower face in the hole 4b and is deformed as if being crushed; thus there occurs a slight gap S at an upper center part in the axial hole 4b. Then to the left and right opening ends 4e is applied a larger load by an amount of inner diameter d1 at the outsides being smaller than the inner diameter d2 at the center part; thus the ends 4e are deformed as if being crushed, and closely in contact with the stabilizer 2 (see FIG. 2A). In addition, FIG. 3B exaggeratedly shows the gap S to depict it.

Thus in the stabilizer bush 4 the left and right opening ends 4e are always closely in contact with the stabilizer 2, and in a state of being pressed. As the result, the stabilizer bush 4 can prevent such earth and sand, dust, and muddy water from invading an inside of the axial hole 4b; and prevent the earth and sand from entering the hole 4b, sliding in contact with the stabilizer 2, and generating an abnormal sound.
Furthermore, when building each stabilizer bush 4 in the vehicle body, the convex part 4g is closely in contacts with the bracket 5 shown in FIG. 1 and the top face 4f closely contacts the body; therefore, there does not occur such a backlash.

Furthermore, as shown in FIG. 2A, in the axial hole 4b the diameter gradually decreases from the inner diameters d2 to d1 from the center part toward the outsides in the axial directions, and the hole 4b is continuously formed in the circumferential direction, it is possible to make a fastening range of the stabilizer 2 larger (see FIGS. 3A and 3B).

As a result thereof, as shown in FIG. 3B, even in a case that a larger load is applied and the stabilizer bush 4 is largely moved, the opening ends 4e are held in close contact with the stabilizer 2 and do not open; therefore, it is possible to surely prevent the invasion of such earth and sand.

Next will be described an action in a case that a particle B such as earth and sand invades an inside of the stabilizer bush 4 by any chance, referring to FIG. 4.
FIG. 4 is a drawing that shows the stabilizer bush related to the embodiment of the present invention and is an enlarged section view of a main part showing a state of a particle such as earth and sand having invaded an inside of an axial hole.

For example, as shown in FIG. 4, when the particle B such as earth and sand invades the inside of the stabilizer bush 4 by any chance, a larger load from the stabilizer 2 is loaded on a lower face within the axis hole 4b of the stabilizer bush 4 if the larger load is applied to the stabilizer 2 in a downward direction (arrow mark A direction shown in FIG. 3B). In this case the angle θ at the opening end 4e of the axial hole 4b is the acute angle, the end 4e is formed into a thin state, the inner diameter of the bush 4 gradually decreases toward the outside, and the bush 4 is formed thin in thickness (see FIG. 2A). Then, a force acts on the opening end 4e so that the end 4e is bent upward, and there occurs a force in an arrow mark C direction shown in FIG. 4. Therefore, the opening end 4e pushes the particle B such as the earth and sand with a smaller surface pressure C in an obliquely inward direction.

Then from an inside more than the particle B such as the earth and sand, a thickness of the stabilizer bush 4 becomes larger, and thereby the bush 4 pushes the particle B with a surface pressure D larger than the surface pressure C in an obliquely outward direction.

As a result thereof, in such the earth and sand B there occurs a force in an arrow mark E direction due to the larger surface pressure D. Therefore, the particle B moves in an outward direction of an arrow mark E along a surface of the stabilizer 2 by the larger surface pressure D and is discharged outside the axial hole 4b. Thus even if the particle B such as the earth and sand invades the inside of the axial hole 4b by any chance, the stabilizer bush 4 has a function of discharging the particle B outside by the forces of the surface pressures C and D that act in the gradient directions.

In addition, it goes without saying that: the present invention is not limited to the embodiment; can be modified and changed within the spirit and scope of the invention; and also covers the modified and changed inventions.

### «Modification Examples»

Next will be sequentially described first to fourth modification examples of the stabilizer bush 4 related to the embodiment of the present invention, referring to FIGS. 5A to 9.

### <First Modification Example>

FIGS. 5A and 5B are drawings showing the first modification example of the stabilizer bush related to the embodiment of the present invention; FIG. 5A is an enlarged section view; and FIG. 5B is an enlarged side view.

Like a stabilizer bush 6 as shown in FIGS. 5A and 5B, groove parts 6e may be formed at ends 6c of sides in an axial direction of an elastic body 6a along opening ends 6d of an axial hole 6b.
In this case the groove parts 6e are annularly formed in vicinities of the opening ends 6d, respectively. Each groove part 6e is composed of an approximately semicircular groove. Furthermore, as shown in FIG. 5A, at each opening end 6d is formed an annular protrusion piece 6f protruding outside by a length L.

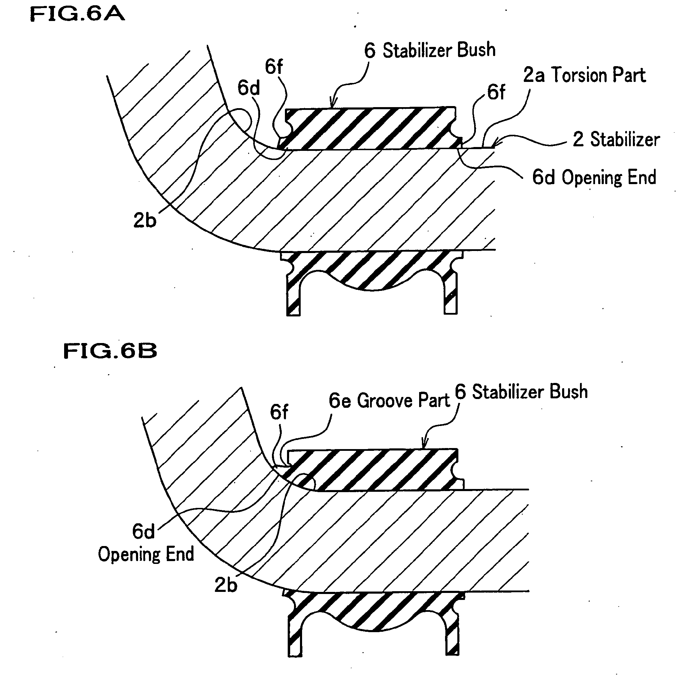

FIGS. 6A and 6B are drawings showing the first modification example of the stabilizer bush related to the embodiment of the present invention; FIG. 6A is an enlarged section view showing a built-in state of the bush; and FIG. 6B is an enlarged section view showing a state of a larger load being applied to the stabilizer.

In the stabilizer 2, as shown in FIG. 6A, is formed a bent part 2b curved outward from one end of an axial direction in some case, so that the stabilizer bush 6 does not move not less than a predetermined range with respect to the stabilizer 2.
In such the case, as shown in FIG. 6B, the stabilizer bush 6 moves to the side of the bent part 2b of the stabilizer 2 in some case, the annular protrusion piece 6f of the opening end 6d mounts on the bent part 2b, and the bush 6 is deformed as if being warped.

In such the case, in the stabilizer bush 6 the annular groove 6e is formed along the vicinity of the opening end 6d, and thereby a compression deformation of the annular protrusion piece 6f is reduced; therefore, the bush 6 can prevent an occurrence of such a wrinkle.
Thus the annular groove 6e of the stabilizer bush 6 is formed in the vicinity of the opening end 6d, and thereby the groove 6e is deformed into a curved form and not buckled; therefore, it is possible to prevent an excessive stress from being applied to the end 6d and to enhance the durability of the bush 6.

### <Second Modification Example>

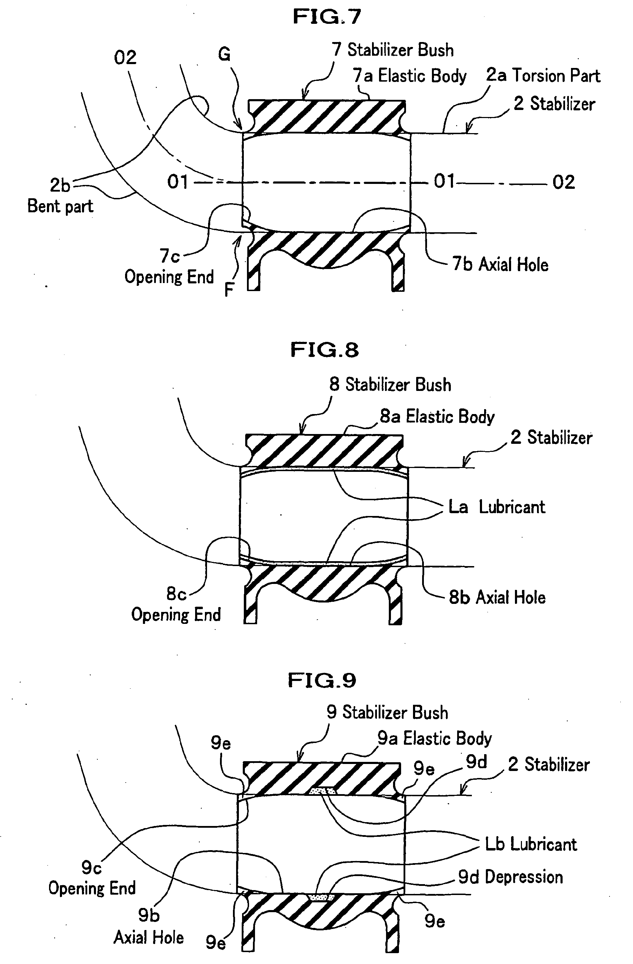

FIG. 7 is an enlarge section view showing the second modification example of the stabilizer bush related to the embodiment of the present invention.

As shown in FIG. 7, in a stabilizer bush 7 a center axis 01-01 may curve outward from one opening end 7c of an axial direction, approximately matching a shape of the bent part 2b formed at the torsion part 2a of the stabilizer 2. Then in an axial hole 7b of an elastic body 7a a vicinity of at least the opening end 7c at a side of the bent part 2b in the hole 7b is formed into a state of being curved and bent outward.
In other words, the center axis O1-O1 of the stabilizer bush 7 is bent approximately along a center axis 02-02 of the bent part 2b of the stabilizer 2. In this case, as shown in FIG. 7, the vicinity of the opening end 7c is curved, and thereby the end 7c is formed into a state of being opened in an oblique direction.

Thus the vicinity of the opening end 7c of the stabilizer bush 7 curves outward and is formed, matching the shape of the stabilizer 2, and thereby an outside corner part F in the vicinity of the end 7c closely contacts the stabilizer 2; therefore, it is possible to stably ensure a fastening range of the bush 7. Moreover, an inside corner part G in the vicinity of the opening end 7c is formed, matching the shape of the stabilizer 2, and thereby it is eliminated to invite a fatigue deterioration of the rubber due to a locally large strain caused by an excessive stress being applied to the end 7c; therefore, it is possible to enhance the durability of the stabilizer bush 7.

### <Third Modification Example>

FIG. 8 is an enlarge section view showing the third modification example of the stabilizer bush related to the embodiment of the present invention.
Like a stabilizer bush 8 shown in FIG. 8, inside an axial hole 8b of an elastic body 8a may be coated a lubricant La such as a silicone oil and a silicone grease having non attacking property to the rubber and a water repellency.

Thus by coating the lubricant La inside the axial hole 8b, a friction coefficient inside the hole 8b of the stabilizer bush 8 lowers and a whole of the bush 8 tends to be deformed as if being undulated; therefore, even if an excessive stress is applied to opening ends 8c, a local deformation of the bush 8 is prevented, and thus it is possible to enhance the durability thereof.
Furthermore, by coating a fat (lubricant La) with the water repellency inside the axial hole 8b, it is possible to more effectively prevent the invasion of muddy water.

### <Fourth Modification Example>

FIG. 9 is an enlarge section view showing the fourth modification example of the stabilizer bush related to the embodiment of the present invention.
Like a stabilizer bush 9 shown in FIG. 9, inside an axial hole 9b of an elastic body 9a may be formed a depression 9d for reserving a lubricant Lb composed of such a grease or a high viscosity oil. In this case the depression 9d is composed of an annular groove or an intermittent groove formed at a center part inside the axial hole 9b.

Thus is formed the depression 9d for reserving the lubricant Lb inside the axial hole 9b, and thereby, even if an oil at seal parts 9e is washed away in vicinities of opening ends 9c, the lubricant Lb reserved in the depression 9d is stably supplied to the seal parts 9e and the water repellency of the stabilizer bush 9 is held for a long time.

### <Other Modification Examples>

Although in the embodiments descriptions have been made citing the symmetric stabilizer bushes 4 and 6-9 as the examples, it is not necessary to make them the symmetric shapes; their shapes may be changed as needed.

Furthermore, the axial holes 4b and 6b to 9b may be formed so that an inner diameter gradually decreases from the center part toward the outsides in the axial directions; for example, the holes 4b and 6b to 9b may be formed into a taper form from the center part toward the respective opening ends 4e, 6d, and 7c to 9c inside them; or only the vicinities of the ends 4e, 6d, and 7c to 9c inside the respective axial holes 4b and 6b to 9b may be formed into a taper form.

## Claims

1. A stabilizer bush for inserting and holding a torsion part (2a) of a stabilizer (2) in an axial hole (4b) formed in an elastic body (4a) and for holding an outer peripheral face (4c) of the elastic body (4a) by a bracket (5) attached to a vehicle body, the axial hole (4b) being configured to gradually decrease in an inner diameter (dl, d2) thereof from a center part toward outsides in axial directions of the hole (4b), wherein the axial hole (4b) is continuously formed in a circumferential direction,
**characterized in that**
the inner surface of the axial hole, when viewed in vertical cross-section, forms an acute angle (θ) with the vertical which increases from an angle slightly smaller than 90 degrees at the left and right opening ends (4e, 6d, 7c, 8c, 9c) to an angle substantially equal to 90 degrees at the center part, whereby in the mounted condition if the bush (4) is radially pressed by the stabilizer (2) a slight gap (S) is formed at the center part of the axial hole (4b), both the left and right opening ends (4e, 6d, 7c, 8c, 9c) being always in close contact with the stabilizer (2).

2. The stabilizer bush according to claim 1, wherein at side ends in the axial directions of the elastic body (6a) are formed grooves (6e) along opening ends of the axial hole (6b).

3. The stabilizer bush according to claim 1 or 2, wherein a center axis (01-01) of the axial hole (7b) is curved outward from one end of the bush (7) in an axial direction.

4. The stabilizer bush according to any one of claims 1 to 3, wherein a lubricant (La, Lb) is coated inside the axial hole (8b, 9b).

5. The stabilizer according to claim 4, wherein a depression (9d) configured to reserve the lubricant (Lb) is formed inside the axial hole (9b).

## Patentansprüche

1. Stabilisatorbuchse zum Einsetzen und Halten eines Torsionsteils (2a) eines Stabilisators (2) in einem in einem elastischen Körper (4a) ausgebildeten axialen Loch (4b) und zum Halten einer Außenumfangsfläche (4c) des elastischen Körpers (4a) durch einen an einem Fahrzeugkörper angebrachten Beschlag (5), wobei das axiale Loch (4b) so konfiguriert ist, dass sein Innendurchmesser (d1, d2) vom Mittelteil zu Außenseiten in axialen Richtungen des Lochs (4b) allmählich abnimmt, worin das axiale Loch (4b) in Umfangsrichtung kontinuierlich ausgebildet ist,
**dadurch gekennzeichnet, dass**
die Innenoberfläche des axialen Lochs, bei Betrachtung im vertikalen Querschnitt, mit der Vertikalen einen spitzen Winkel (Θ) bildet, der von einem Winkel, der an den linken und rechten offenen Enden (4e, 6d, 7c, 8c, 9c) etwas kleiner als 90° ist, zu einem Winkel, der an dem Mittelteil angenähert gleich 90° ist, zunimmt, wodurch im montierten Zustand, wenn die Buchse (4) von dem Stabilisator (2) radial zusammengedrückt wird, eine kleine Lücke (S) an dem Mittelteil des axialen Lochs (4b) gebildet wird, wobei die linken und rechten offenen Enden (4e, 6d, 7c, 8c, 9c) immer in engem Kontakt mit dem Stabilisator (2) sind.

2. Die Stabilisatorbuchse nach Anspruch 1, worin an Seitenenden in den axialen Richtungen des elastischen Körpers (6a) Nuten (6e) entlang offenen Enden des axialen Lochs (6b) ausgebildet sind.

3. Die Stabilisatorbuchse nach Anspruch 1 oder 2, worin eine Mittelachse (01-01) des axialen Lochs (7b) vom einen Ende der Buchse (7) in axialer Richtung nach außen gekrümmt ist.

4. Die Stabilisatorbuchse nach einem der Ansprüche 1 bis 3, worin die Innenseite des axialen Lochs (8b, 9b) mit einem Schmiermittel (La, Lb) beschichtet ist.

5. Der Stabilisator nach Anspruch 4, worin eine zur Aufnahme des Schmiermittels (Lb) konfigurierte Vertiefung (9b) innerhalb des axialen Lochs (9b) ausgebildet ist.

## Revendications

1. Douille de barre stabilisatrice permettant d'insérer et de supporter une partie de torsion (2a) d'une barre stabilisatrice (2) dans un trou axial (4b) formé dans un corps élastique (4a) et permettant de soutenir une face périphérique externe (4c) du corps élastique (4a) grâce à un support (5) attaché à une carrosserie de véhicule, le trou axial (4b) étant configuré pour diminuer progressivement dans un diamètre interne (dI, d2) de ce dernier à partir d'une partie centrale vers l'extérieur dans des directions axiales du trou (4b), dans laquelle le trou axial (4b) est formé de façon continue dans une direction circonférentielle,
**caractérisée en ce que**
la surface interne du trou axial, vue en coupe verticale, forme un angle aigu (θ) avec la verticale qui augmente d'un angle légèrement plus petit que 90 degrés aux extrémités d'ouverture gauche et droite (4e, 6d, 7c, 8c, 9c) à un angle sensiblement égal à 90 degrés au niveau de la partie centrale, moyennant quoi dans la condition montée, si la douille (4) est radialement pressée par la barre stabilisatrice (2) un léger écartement (S) est formé au niveau de la partie centrale du trou axial (4b), les deux extrémités d'ouverture gauche et droite (4e, 6d, 7c, 8c, 9c) étant toujours en contact étroit avec la barre stabilisatrice (2).

2. Douille de barre stabilisatrice selon la revendication 1, dans laquelle des rainures (6e) sont formées le long d'extrémités d'ouverture du trou axial (6b) au niveau d'extrémités latérales dans les directions axiales du corps élastique (6a).

3. Douille de barre stabilisatrice selon la revendication 1 ou 2, dans laquelle un axe central (01-01) du trou axial (7b) est courbé vers l'extérieur en partant d'une extrémité de la douille (7) dans une direction axiale.

4. Douille de barre stabilisatrice selon l'une quelconque des revendications 1 à 3, dans laquelle un lubrifiant (La, Lb) est appliqué à l'intérieur du trou axial (8b, 9b).

5. Barre stabilisatrice selon la revendication 4, dans laquelle une dépression (9d) configurée pour réserver le lubrifiant (Lb) est formée à l'intérieur du trou axial (9b).
